# EUROPÄISCHE PATENTSCHRIFT

(11) **EP 0 561 013 B1**
(45) Veröffentlichungstag und Bekanntmachung des Hinweises auf die Patenterteilung: **02.03.1994**
(21) Anmeldenummer: 92104518.3
(22) Anmeldetag: 16.03.1992
(51) Int. Cl.: H02K 7/118, H02K 1/28, F04D 29/66

(54) **Einphasen-Synchronmotor**
Single-phase synchronous motor
Moteur synchrone monophasé

(43) Veröffentlichungstag der Anmeldung: 22.09.1993
(73) Patentinhaber: SIEMENS AKTIENGESELLSCHAFT, 80333 München (DE)
(72) Erfinder: Hartmann, Uwe, Dipl.-Ing. (FH), W-8709 Rimpar (DE)

(56) Entgegenhaltungen:
- EP-A- 0 287 984
- DE-A- 1 413 466
- DE-U- 9 016 330
- DE-U- 9 108 456
- US-A- 4 687 945
- US-A- 4 948 346
- PATENT ABSTRACTS OF JAPAN, vol. 10, no. 356 (E-459)(29), November 1986 ; & JP-A-61 154 437

## Beschreibung

Die Erfindung bezieht sich auf einen Einphasen-Synchronmotor gemäß Oberbegriff des Patentanspruchs 1; ein derartiger Einphasen-Synchronmotor ist aus der DE-U-90 16 330 bekannt.

Synchronmotoren mit Dauermagnetrotor gemäß der vorgenannten Art können bauartbedingt nicht asynchron anlaufen sondern müssen innerhalb einer elektrischen Halbwelle auf die Nenndrehzahl beschleunigen; der Synchronmotor muß dabei nicht nur das statische Lastmoment überwinden, sondern im Anlauf zusätzlich ein Beschleunigungsmoment erbringen, das dem Trägkeitsmoment der Last direkt proportional ist. Um dieses Trägheitmoment unmittelbar nach dem Einschalten des Synchronmotor zu reduzieren, ist im vorgenannten bekannten Fall eine Kupplung mit Verdrehspiel zwischen dem Dauermagnet-Körper einerseits und der mit dem Abtrieb verbundenen Rotorwelle andererseits vorgesehen, derart daß der Einphasen-Synchronmotor im ersten Augenblick des Einschaltens der Statorerregung noch frei von der Belastung durch die über die Rotorwelle anzutreibende Last den Einschwingvorgang beginnen und erst nach Durchlaufen des Verdrehspiels gegen ein abtriebsseitiges, mit der Rotorwelle verbundenes Kupplungsteil anschlägt; zur Anschlagdämpfung zwischen diesem abtriebsseitigen Kupplungsteil und dem mit Verdrehspiel auf der Rotorwelle gelagerten Dauermagnet-Körper ist ein in beiden Drehrichtungen elastisches Mitnahme-Zwischenglied in Form eines Elastomers vorgesehen.

Bei einem anderen, durch die DE-U-88 07 108 bekannten Einphasen-Synchronmotor wird als elastisches Zwischenglied eine Schenkelfeder benutzt.

Die Einsatzbedingungen für derartige Einphasen-Synchronmotoren, insbesondere bei Verwendung für Antriebe mit hohen Anforderungen an eine wirksame Geräuschdämmung und lange Betriebsstandzeiten, können mit einfachen Mitteln durch die Lehre des Anspruchs 1 verbessert werden; vorteilhafte Ausgestaltungen dieser Erfindung sind jeweils Gegenstand der Unteransprüche.

Das erfindungsgemäß vorgesehene elastische Abstütz-Zwischenglied dämpft Reaktions-Stöße zwischen der Rotorwelle und deren Lager an dem einen axialen Ende des Dauermagnet-Körpers bei dessen Anschlagen an seine Mitnahmekupplung zur Rotorwelle nach dem Durchlaufen des jeweiligen Verdrehspiels an seinem anderen axialen Ende; dadurch werden sowohl Anschlaggeräusche als auch Lagerbeschädigungen vermieden.

In fertigungstechnisch besonders vorteilhafter Weise ist als elastisches Abstütz-Zwischenglied ein O-Ring vorgesehen, der in montagetechnisch besonders einfacher Weise von einer Aufnahmetasche gehalten wird, die stirnseitig an einen das Magnetmaterial des Rotors haltenden und diese umfassenden Kunststofftragkörper angespritzt ist. Der O-Ring ist derart angeordnet, daß er einerseits an dem Dauermagnet-Körper fixiert ist und andererseits beim Verdrehspiel relativ zur Oberfläche der Rotorwelle verschwenkbar ist, jedoch durch radiales Überstehen gegenüber der rotorwellenseitigen Bohrung des Dauermagnet-Körpers sicherstellt, daß dieser nur über das elastische Mitnahme-Zwischenglied mit der Rotorwelle in Verbindung steht.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen
- FIG 1: in einem vergrößerten Ausschnitt den an seiner einen Stirnseite mit einem elastischen Abstütz-Zwischenglied versehenen Dauermagnet-Körper eines zum Antrieb einer Laugenpumpe vorgesehenen Einphasen-Synchronmotors;
- FIG 2: in einem axialen Teilschnittbild eine von einem Einphasen-Synchronmotor angetriebene Laugenpumpe ohne Abstützung des Dauermagnet-Körpers über ein elastisches Abstütz-Zwischenglied.

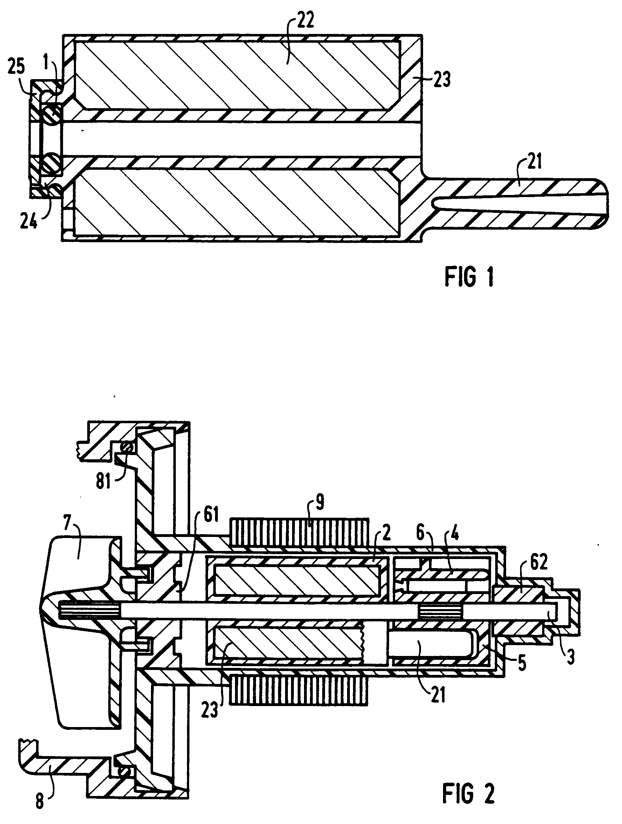

Gemäß FIG 2 ist in einem Spaltrohr 6 über ein erstes pumpenseitiges Rotorlager 61 und ein zweites kupplungsseitiges Rotorlager 62 die Rotorwelle 3 eines Einphasen-Synchronmotors zum Antrieb einer Laugenpumpe drehbar gelagert. Das Spaltrohr 6 wird von einem bewickelten Statorblechpaket 9 eines Spaltpolmotors umfaßt. Das Spaltrohr 6 mündet an seinem linken Ende in einen Spaltrohrflansch, an dem unter Zwischenlage einer Gehäusedichtung 81 das Pumpengehäuse 8 der Laugenpumpe befestigt ist. Das linke Ende der Rotorwelle 3 ragt axial über das erste Rotorlager 61 hinaus in das Pumpengehäuse 8 und trägt dort ein Pumpenrad 7.

Im Bereich des Statorblechpaketes 9 ist im Rotorraum ein Dauermagnet-Körper 2 mit einem Kunststofftragkörper 23 für ein polarisiertes Magnetmaterial 22 derart vorgesehen, daß der Dauermagnet-Körper 2 mit Verdrehspiel relativ zur Rotorwelle 3 tangential verschwenkbar ist und über einen Kupplungsfinger 21 an seiner rechten Stirnseite über ein elastisches Mitnahme-Zwischenglied 4 mit einer auf der Rotorwelle 3 befestigten Kupplungshülse 5 nach dem Hochlauf des Rotors in Mitnahmeverbindung bringbar ist. Diese Anordnung des Dauermagnet-Körpers 2 auf der Rotorwelle 3 und dessen Mitnahmeankupplung an die Rotorwelle 3 gewährleistet, daß der Dauermagnet-Körper nach dem Einschalten der Statorwicklung 9 zunächst ohne Belastung durch das abtriebsseitige Pumpenrad 7 um einen das Verdrehspiel bestimmenden Verdrehwinkel hochlaufen kann, ehe er durch Anschlag des Kupplungsfingers 21 unter vorhergehendem elastischen Zusammendrücken des elastischen Mitnahme-Zwischengliedes 4 gegen die Kupplungshülse 5 anschlägt und diese mitnimmt.

Erfindungsgmäß ist nun - wie insbesondere aus der vergrößerten Darstellung gemäß FIG 1 ersichtlich - ein elastisches Abstütz-Zwischenglied in Form eines O-Ringes 1 an dem anderen axialen Ende des Magnetkörpers 2 derart vorgesehen, daß durch entsprechendes radiales Überstehen des elastischen Abstütz-Zwischengliedes gegenüber der Innenumfangsfläche der zum Durchstecken der Rotorwelle 3 vorgesehenen Wellenbohrung des Kunststofftragkörpers 23 gewährleistet ist, daß der Kunststofftragkörper 23 nur über das elastische Zwischenglied mit der Rotorwelle 3 in Verbindung bringbar ist. Dadurch ist in vorteilhafter Weise sichergestellt, daß der als Reaktion beim Anschlag des Kupplungsfingers 21 an die Kupplungshülse 5 auch am anderen axialen Ende des Dauermagnet-Körpers 2 auftretende Stoß nicht direkt sondern nur über den O-Ring 1 gedämpft auf die Rotorwelle 3 und insbesondere auf deren benachbartes Lager 61 einwirken kann.

Zur Aufnahme des relativ zum Magnetkörper 2 und insbesondere zu dessen Kunststofftragkörper 23 ortsfest gehaltenen O-Ringes 1 ist an die Stirnseite des Kunststofftragkörpers 23 in fertigungs- und montagetechnisch vorteilhafter Weise eine, vorzugsweise axial bestückbare Aufnahmetasche 24 angespritzt, die nach einer weiteren Ausgestaltung der Erfindung zur Sicherung des eingelegten O-Ringes 1 durch eine ebenfalls axial montierbare, vorzugsweise axial aufschnappbare Verschlußkappe 25 verschließbar ist.

Einphasen-Synchronmotoren der vorgenannten Art sind vorteilhaft einsetzbar zum Antrieb von Flüssigkeitspumpen, insbesondere für mit Forderungen nach hoher Geräuscharmut und langen Betriebsstandzeiten gekennzeichneten Haushaltsmaschinen-Laugenpumpen, mit in einem Spaltrohr als Naßläufer gelagerten Rotor, auf dessen einem Ende der Rotorwelle das Pumpenrad der Flüssigkeitspumpe befestigt ist, und mit einer Anordnung des elastischen Mitnahme-Zwischengliedes 4 an dem einen Ende des Dauermagnet-Körpers 2 und einer Anordnung des elastischen Abstütz-Zwischengliedes 4 auf dem pumpenradseitigen anderen Ende des Dauermagnet-Körpers 2.

## Patentansprüche

1. Einphasen-Synchronmotor mit einem mit Verdrehspiel auf seiner Rotorwelle (3) gelagerten Dauermagnet-Körper (2), der im Bereich seines einen axialen Endes über ein elastisches Mitnahme-Zwischenglied (4) in beiden Drehrichtungen an die Rotorwelle (3) angekuppelt ist, **gekennzeichnet** **durch** zumindest ein elastisches Abstütz-Zwischenglied (O-Ring 1) zwischen der Rotorwelle (3) und dem Dauermagnet-Körper (2) im Bereich seines anderen axialen Endes.

2. Einphasen-Synchronmotor nach Anspruch 1, **gekennzeichnet** **durch** ein relativ zum Dauermagnet-Körper (2) ortsfest und relativ zur Rotorwelle (3) verdrehbar gehaltenes Abstütz-Zwischenglied (O-Ring 1).

3. Einphasen-Synchronmotor nach Anspruch 2, **gekennzeichnet** **durch** einen am Dauermagnet-Körper (2) fixierten, die Rotorwelle (3) umfassenden O-Ring (1).

4. Einphasen-Synchronmotor mit einer Mitnahme-Ankupplung (Kupplungsfinger 21) zu der Rotorwelle (3) an der Stirnseite des einen axialen Endes des Dauermagnet-Körpers (2) nach einem der Ansprüche 1-3, **gekennzeichnet** **durch** eine Aufnahme des elastischen Abstütz-Zwischengliedes (O-Ring) an der Stirnseite des anderen axialen Endes des Dauermagnet-Körpers (2).

5. Einphasen-Synchronmotor mit einem das Magnetmaterial haltenden, zumindest stirnseitig den Dauermagnet-Körper (2) umfassenden Kunststofftragkörper (23) nach Anspruch 4, **gekennzeichnet durch** eine stirnseitig an den Kunststofftragkörper (23) angeformte Aufnahmetasche (24) für das elastische Abstütz-Zwischenglied (O-Ring 1).

6. Einphasen-Synchronmotor nach Anspruch 5, **gekennzeichnet** **durch** eine axial mit dem elastischen Zwischenglied (O-Ring 1) bestückbare Aufnahmetasche (24).

7. Einphasen-Synchronmotor nach Anspruch 6, **gekennzeichnet** **durch** eine die bestückte Aufnahmetasche (24) axial abschließende Verschlußkappe (25).

8. Einphasen-Synchronmotor zum Antrieb einer Flüssigkeitspumpe, insbesondere einer Haushaltsmaschinen-Laugenpumpe, mit in einem Spaltrohr (6) als Naßläufer gelagerten Rotor, auf dessen einem Ende der Rotorwelle (3) das Pumpenrad (7) der Flüssigkeitspumpe befestigt ist, nach einem der Ansprüche 1-7, **gekennzeichnet durch** eine Anordnung des elastischen Abstütz-Zwischengliedes (O-Ring 1) auf dem pumpenradseitigen einen Ende des Dauermagnet-Körpers (2) und des elastischen Mitnahme-Zwischengliedes (4) auf dessen anderem Ende des Dauermagnet-Körpers (2).

## Claims

1. Single-phase synchronous motor with a permanent-magnet body (2) mounted with rotational clearance on its rotor shaft (3), the permanent-magnet body being coupled to the rotor shaft (3) in both directions of rotation in the region of its one axial end by way of an elastic synchronization intermediate element (4), characterized by at least one elastic support intermediate element (O-ring 1) between the rotor shaft (3) and the permanent-magnet body (2) in the region of its other axial end.

2. Single-phase synchronous motor according to claim 1, characterized by a support intermediate element (O-ring 1) held in a fixed manner relative to the permanent-magnet body (2) and held in a rotatable manner relative to the rotor shaft (3).

3. Single-phase synchronous motor according to claim 2, characterized by an O-ring (1) fixed to the permanent-magnet body (2) and encompassing the rotor shaft (3).

4. Single-phase synchronous motor with a synchronization coupling (coupling finger 21) to the rotor shaft (3) at the front side of the one axial end of the permanent-magnet body (2) according to one of claims 1-3, characterized by accommodation of the elastic support intermediate element (O-ring) at the front side of the other axial end of the permanent-magnet body (2).

5. Single-phase synchronous motor with a plastic support body (23) holding the magnet material and encompassing the permanent-magnet body (2) at least on the front side according to claim 4, characterized by an accommodation pocket (24) moulded on the front side on the plastic support body (23) for the elastic support intermediate element (O-ring 1).

6. Single-phase synchronous motor according to claim 5, characterized by an accommodation pocket (24) which can be axially equipped with the elastic intermediate element (O-ring 1).

7. Single-phase synchronous motor according to claim 6, characterized by a closure cap (25) axially sealing the equipped accommodation pocket (24).

8. Single-phase synchronous motor for driving a liquid pump, in particular a household machine lye pump, with a rotor mounted as a wet rotor in a collimator tube (6), on the one end of which of the rotor shaft (3) the pump wheel (7) of the liquid pump is fastened, according to one of claims 1-7, characterized by an arrangement of the elastic support intermediate element (O-ring 1) on the pump-wheel-side end of the permanent-magnet body (2) and the elastic synchronization intermediate element (4) on the other end of the permanent-magnet body (2).

## Revendications

1. Moteur synchrone monophasé comportant un corps (2) formé d'un aimant permanent, qui est tourillonné avec un jeu de rotation sur l'arbre (3) du rotor du moteur et qui est accouplé, au niveau de l'une de ses extrémités axiales, au moyen d'un organe intermédiaire élastique d'entraînement (4) dans les deux sens de rotation, à l'arbre (3) du rotor, caractérisé par au moins un organe intermédiaire élastique de support (joint torique 1) disposé entre l'arbre (3) du rotor et le corps à aimant permanent (2), dans la zone de son autre extrémité axiale.

2. Moteur synchrone monophasé suivant la revendication 1, caractérisé par un organe intermédiaire de support (joint torique 1) maintenu fixe par rapport au corps à aimant permanent (2) et avec possibilité de rotation par rapport à l'arbre (3) du rotor.

3. Moteur synchrone monophasé suivant la revendication 2, caractérisé par un joint torique (1) fixé sur le corps à aimant permanent (2) et entourant l'arbre (3) du rotor.

4. Moteur synchrone monophasé comportant un système d'accouplement d'entraînement (doigts d'accouplement 21) avec l'arbre (3) du rotor, au niveau de la face frontale d'une extrémité axiale du corps à aimant permanent (2) suivant l'une des revendications 1-3, caractérisé par un logement de l'organe intermédiaire élastique de support (joint torique) sur la face frontale de l'autre extrémité axiale du corps à aimant permanent (2).

5. Moteur synchrone monophasé comportant un corps de support en matière plastique (23) retenant le matériau magnétique et entourant au moins frontalement le corps à aimant permanent (2), suivant la revendication 4, caractérisé par un logement (24) formé frontalement par moulage sur le corps de support en matière plastique (23) et prévu pour l'organe intermédiaire élastique de support (joint torique 1).

6. Moteur synchrone monophasé suivant la revendication 5, caractérisé par un logement (24) pouvant être équipé axialement avec l'organe intermédiaire élastique (joint torique 1).

7. Moteur synchrone monophasé suivant la revendication 6, caractérisé par un capot de fermeture (25) qui ferme axialement le logement équipé (24).

8. Moteur synchrone monophasé pour l'entraînement d'une pompe à liquide, notamment d'une pompe à lessive d'un appareil électroménager comportant un rotor tourillonné en tant que rotor humide dans une gaine (6), la roue (7) de la pompe à liquide étant fixée sur une extrémité de l'arbre (3) du rotor, suivant l'une des revendications 1-7, caractérisé par un montage de l'organe intermédiaire élastique de support (joint torique 1) sur une extrémité, située du côté de la roue de la pompe, du corps à aimant permanent (2) et de l'organe intermédiaire élastique d'entraînement (4) sur l'autre extrémité du corps à aimant permanent (2).
